**Europäisches Patentamt**

(19) **European Patent Office**

**Office européen des brevets**

(11) Publication number : **0 527 949 B1**

(12) # EUROPEAN PATENT SPECIFICATION

(45) Date of publication of patent specification :
19.01.94 Bulletin 94/03

(51) Int. Cl.⁵ : **G01N 17/00**

(21) Application number : **91911389.4**

(22) Date of filing : **06.05.91**

(86) International application number :
**PCT/US91/03097**

(87) International publication number :
**WO 91/17423 14.11.91 Gazette 91/26**

(54) **METHOD AND APPARATUS FOR MONITORING CORROSION AND REPORTING SAME ACCORDING TO ACCEPTED INDUSTRY STANDARDS.**

(30) Priority : **08.05.90 US 521079**

(43) Date of publication of application :
**24.02.93 Bulletin 93/08**

(45) Publication of the grant of the patent :
**19.01.94 Bulletin 94/03**

(84) Designated Contracting States :
**AT BE CH DE DK ES FR GB GR IT LI LU NL SE**

(56) References cited :
**WO-A-85/04254**
**US-A- 3 253 219**
**US-A- 4 783 987**
**US-A- 4 869 874**

(73) Proprietor : **PURAFIL, INC.**
**2654 Weaver Way**
**Doraville, GA 30366 (US)**

(72) Inventor : **OSBORNE, Michael, William**
**5020 Bainbridge Court**
**Lilburn, GA 30247 (US)**
Inventor : **ENGLAND, William, Gordon**
**5117 Suwanee Dam Road**
**Suwanee, GA 30174 (US)**
Inventor : **ZHANG, Xiuyi Chemical Engineering Dept.**
**University of Petroleum**
**Dongying Shandong, 257062 (CN)**

(74) Representative : **Chettle, Adrian John**
**Withers & Rogers 4, Dyer's Buildings Holborn**
**London EC1N 2JT (GB)**

## Description

### Cross-Reference to Related Application

This application is a continuation-in-part of Serial No. 521,079, filed May 8, 1990, currently pending.

### Technical Field

This invention relates generally to a method and apparatus for monitoring corrosion, and particularly to a method of reporting corrosion in terms of an industry-accepted standard of corrosion thickness, taking into consideration variances in atmospheric conditions such as temperature and humidity.

### Background of the Invention

Many metal-containing devices and structures must function in corrosive atmospheres which cause them to deteriorate over time. Corrosion may take the form of metal oxides resulting from reaction with oxygen in the air, or may be compounds formed with the effluent of industrial processes, such as hydrogen sulfide.

In the electronics industry, for example, approximately one-third of all warranty repair work is attributable to corrosion. Accordingly, the ability to accurately monitor corrosion and take appropriate measures to deter its spread are of utmost importance to the industry.

The standard method of monitoring corrosion has historically been accomplished using a reactivity monitoring procedure such as the so-called "coupon" method. Under this method, strips of copper are placed in the environment where corrosion is to be monitored. The coupons carry an initial copper oxide corrosion thickness of about 100 Angstroms (Å). After a period of time in the environment, usually around thirty days, the change in thickness of corrosive buildup on the strips, or coupons, is measured using a complex coulometric reduction procedure, well known to those skilled in the art.

Using an accepted standard such as Standard No. ISA-S71.04-1985 set by the Instrument Society of America (ISA) of Research Triangle Park, North Carolina, this change in thickness is then projected over a chosen period of time. Other organizations, such as Battelle of Columbus, Ohio, have also developed such standards which, like the ISA standard, are based on reactivity monitoring techniques. Given a corrosive buildup after any number of days, the standard may be applied to project the weekly, monthly, or annual buildup of corrosion in the environment. Such information is vital to the electronics industry in determining the reliability and projected lifetime of equipment. It may affect the scope or duration of warranty coverage, particularly in limiting such coverage when the equipment will be used in corrosive environments. The reactivity monitoring method of corrosion monitoring using coupons is discussed in further detail in "Environmental Conditions and Process Measurement and Control Systems: Airborne Contaminants," a 1985 ISA publication; and *Krumbein, Newell, and Pascucci,* "Monitoring Environmental Tests by Coulometric Reduction of Metallic Control Samples," *Journal of Testing and Evaluation,* Vol. 17, No. 6, Nov. 1989, pp. 357-67, both of which are incorporated herein by reference. Although copper, silver, and nickel are all part of the electronic circuitry, copper is the only metal addressed by the ISA standard. Accordingly, there is a need in the art to monitor the corrosion of electronics circuitry containing other corrodible metals, in addition to copper. References to corrodible metals herein include any corrodible metal, and also include such metals coated with gold. Examples of corrodible metals, without limitation thereto, are copper, silver, nickel, and laminates of such metals which may or may not be coated with gold.

One major disadvantage of the coupon method of reactivity monitoring, however, is the destructive nature of the measurement. Once the thickness of corrosion on the coupon has been measured, the coupon must be discarded and, although the measurement may be projected over a desired period of time, further actual corrosion measurements may only be taken with a new coupon. Accordingly, there is a need in the art to provide a non-destructive method for measuring corrosion in terms of recognized reactivity monitoring standards.

One possible solution to this problem is to measure the corrosion buildup in terms of frequency change. Such a solution has been disclosed in the prior art writings of *Lu & Czanderna,* APPLICATIONS OF PIEZOELECTRIC QUARTZ CRYSTAL MICROBALANCES (Elsevier, 1984), pages 203-05; and *Lee, Siegmann, & Eldridge,* "A Comparison of the Mass and Resistance Change Techniques for Investigating Thin Film Corrosion Kinetics," 124 *Journal of the Electrochemical Society* (May 1977, pages 1744-47), which are both incorporated herein by reference. The use of a piezoelectric crystal to analyze corrosion is also generally disclosed in U.S. Patent No. 4,783,987, to *Hager et al.,* also incorporated herein by reference. These references teach the use of a quartz crystal microbalance (QCM) which is attached to an oscillator, from which the frequency of vibration of the QCM is measured. As the metal layered on the quartz crystal corrodes over time, the frequency of the QCM changes, thus providing an indication of corrosion in terms of frequency change.

Measuring the change in frequency of the QCM enables one to conduct real-time measurements of corrosion. Unlike the reactivity monitoring coupon method, which requires a new, unblemished coupon each time the thickness of corrosion is measured, frequency measurements may be repeated time and time again as the corrosion continues to accumulate without destroying the QCM. However, an indication of frequency change does not allow comparison with specifications stated in terms of an accepted industry standard of corrosion measurement which is stated in terms of thickness.

It should be noted that a reactivity monitoring coupon prepared according to the ISA standard has a surface quite different from that of a coated crystal. The ISA standard requires that the coupon, a metal strip, be sanded or abraded. Thus, the coupon presents a rough surface to the corrosive atmosphere. In contrast, the metal layer on a coated crystal is vacuum deposited to form a shiny, smooth surface. Corrosion forms differently on such different surfaces. Therefore, finding a correlation between corrosion on a coated crystal detected by means of a change in the frequency of vibration of the crystal, and the corrosion that would have occurred under the same conditions on a new, unblemished coupon prepared according to a standardized reactivity monitoring procedure, is not a simple or obvious matter.

U.S. Patent No. 3,253,219, to *Littler,* describes the use of a piezoelectric crystal to measure the decrease in thickness over time of a test specimen, such as a vinyl acetate resin, which is adhered to the crystal. As the thickness of the specimen decreases, the frequency of vibration of the crystal increases. When a crystal with a 3.5 MHz oscillating frequency is utilized, a decrease in thickness of 1 Å is said to be equivalent to an increase in frequency of 1 Hz. *Littler,* however, does not address the corrosion of metals, which are the subject of the electronic industry's concerns. Our tests have shown that *Littler's* teaching regarding the thickness change of eroding plastics does not hold true for corroding metals laminated on the vibrating crystals we have tested. Thus, there has been a need in the art for a corrosion monitor using a piezoelectric crystal that can report corrosion measurements in terms of an accepted reactivity monitoring standard. Furthermore, *Littler* does not suggest or disclose any means for monitoring, generating, or displaying the thickness of corrosion. Importantly, *Littler* does not address the impact of atmospheric factors, such as air- temperature or relative humidity, on the ability to accurately monitor the buildup of corrosion.

U.S. Patent No. 4,869,874, to *Falat,* which is incorporated herein by reference, describes a device which measures corrosion, taking into account atmospheric conditions such as temperature, pressure, and humidity by comparing existing conditions to present limits. However, in order to achieve accurate, useful results, *Falat* requires that the monitoring occur over an extended designated period of time, usually on the order of about six months. There is therefore a need in the art to provide a corrosion monitor that takes atmospheric conditions, such as temperature and humidity, into consideration and provides accurate, useful data on an as-needed basis, as frequently as daily.

## Summary of the Invention

The present invention fulfills the needs in the prior art. Broadly described, the present invention provides a method and apparatus for using a piezoelectric crystal to monitor and report corrosion in terms recognized as conforming to an industry standard.

Generally described, the present invention provides a method of and system for monitoring corrosion in a corrosive atmosphere, according to Claims 1 and 12.

In a preferred embodiment, the invention also includes correcting the measured frequency change during each measurement interval to account for any deviation in the temperature in the atmosphere from a preset standard temperature. The thickness signal thus preferably represents the thickness of corrosion in accordance with ISA or other reporting standards, based upon the temperature-corrected frequency change. Optionally, an intermediate thickness signal can be generated representing the thickness of corrosion during the measurement interval prior to conversion to a value representing the thickness of corrosion that would have accumulated during said measurement interval utilizing a standardized reactivity monitoring procedure.

Thus, the intermediate thickness signal representing corrosion is preferably generated by multiplying the temperature-corrected frequency change during the measurement interval by a predetermined factor necessary to convert the frequency change to a thickness value. Although the corrosion on the coated crystal can be determined in such a manner for any desired interval, the correlation to a standardized reactivity monitoring standard is not complete until the intermediate corrosion thickness value for any given interval is further converted to represent the corrosion thickness that would have resulted if, at the beginning of the interval, a new, unblemished reactivity monitoring coupon prepared according to the standard had been used to monitor corrosion during the interval.

The present invention also preferably includes a humidity sensor, which serves as the impetus for providing an alarm to the user if the relative humidity is above a preset limit, or if the relative humidity changes during an interval by more than a preset limit.

The present invention may also provide for displaying the thickness signal, the temperature, and the relative humidity. Such outputs may also be directed to other devices such as digital storage or graphical recorders, and they also may be used to trigger alarms to the user.

In the preferred embodiment of the present invention, a piezoelectric crystal, such as a 6Mhz "AT cut" quartz crystal in a mounting such as the "Holder Series W-8" manufactured by McCoy Electronics Company of Mt. Holly Springs, Pennsylvania, is coated with a corrodible metal as defined above. The coated crystal is mounted on a three-prong stand, dried in an oven, and cleaned. It has been found that cleaning with a chlorinated flux solution followed by rinsing in distilled water and boiling in alcohol removes any unwanted coatings that may be deposited in the process of curing the coated crystal in the holder. A suitable flux is Flux Solution 709, made by Alpha Metals of Atlanta, Georgia. Preferably, the coated crystal is surrounded by an inert gas and sealed from the ambient air until the monitor is ready for use. The QCM is then placed in a corrosive atmosphere and can be connected to an oscillator before or after placement in the corrosive atmosphere. As the corrodible metal corrodes, the frequency of vibration of the QCM decreases. The frequency reading is then converted, using factors determined in a manner described below, to a thickness reading corresponding to a selected corrosion thickness standard.

A corrosion monitor according to the present invention finds application in such environments as industrial process measurement and control rooms, motor control centers, electrical rooms, semiconductor clean rooms, electronic fabrication sites, commercial data centers, museums, libraries, and archival storage rooms. It is also useful for checking the exhaustion level of filtration media being used to protect the environment of such spaces.

Accordingly, it is an object of the present invention to provide an apparatus for using a coated piezoelectric crystal to monitor and report corrosion in terms recognized as conforming to an industry standard reactivity monitoring procedure.

It is another object of the present invention to provide a method for using a coated piezoelectric crystal to monitor and report corrosion in terms recognized as conforming to such an industry standard.

It is another object of the present invention to provide a method and apparatus for converting frequency measurements obtained from a sample of corroding metal to thickness values which conform to such an industry standard for measuring corrosion.

It is a further object of the present invention to provide a method and apparatus for correcting measured changes in frequency of a vibrating crystal coated with a corroding metal in order to account for deviations in temperature from a certain predetermined standard temperature.

It is another object of the present invention to provide a method and apparatus for generating a signal corresponding to the change in corrosion thickness during any desired interval of time, and also for converting the signal so as to relate it to an industry reactivity monitoring standard which requires that each interval begin with a new, unblemished prepared specimen.

It is another object of the present invention to provide a method and apparatus for determining whether certain atmospheric conditions related to the relative humidity are contributing to corrosion in a corrosive atmosphere and, if so, generating an alarm signal informing users of the present invention of such conditions.

These and other objects, features, and advantages of the present invention may be more clearly understood and appreciated from a review of the following detailed description of the disclosed embodiment and by reference to the appended drawings and claims.

## Brief Description of the Drawing Figures

FIG. 1 is a schematic diagram of a corrosion monitor embodying the present invention.

FIGS. 2A and 2B show a flow chart representing the corrosion monitoring method embodied by the present invention.

FIG. 3 is a cross-sectional view of a plated quartz crystal and the various layers of metallic substances coated thereon, utilized in the preferred embodiment of the present invention.

FIG. 4 is perspective view of the quartz crystal shown in Fig. 3.

Fig. 5 is a graphical representation of the performance of the preferred embodiment of the present invention with respect to cumulative corrosion data.

Fig. 6 is a graphical representation of the performance of the preferred embodiment of the present invention with respect to incremental corrosion data, with a particular interval of one day.

## Detailed Description of the Preferred Embodiment

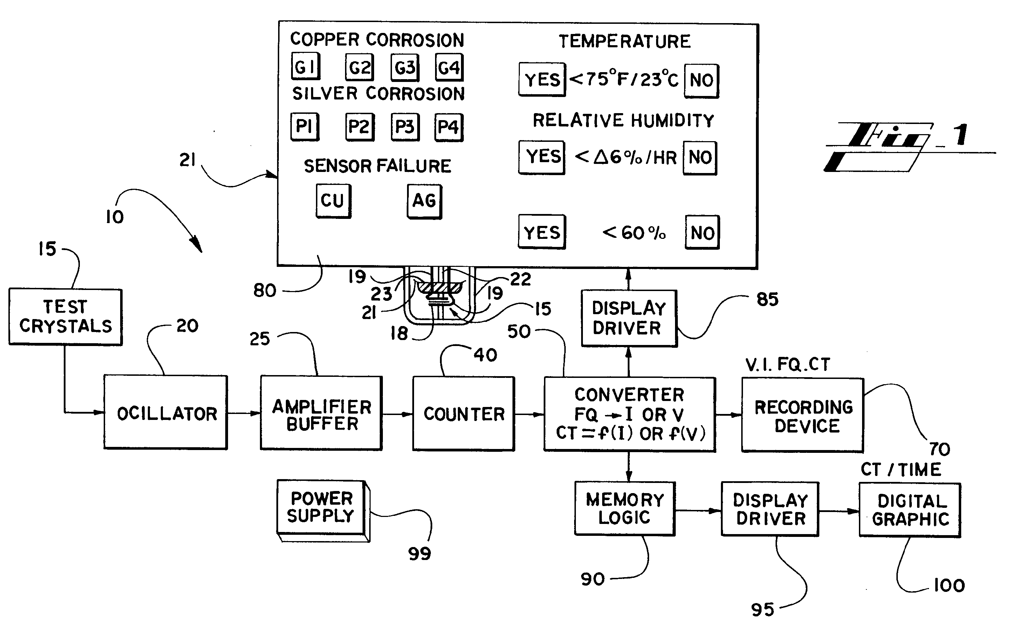

Referring now to the drawings, in which like numerals indicate like elements throughout the several views, **FIG. 1** is a schematic representation of a preferred corrosion monitor **10** embodying the present invention. One or more coated quartz crystals **15** are attached to an oscillator **20**, which drives the vibration of the coated crystal **15** and outputs signal pulses corresponding to vibrations of the coated crystal. The oscillator output is provided to a counter **40** via a bridge **25** which includes an amplifier and a buffer. The buffer prevents the oscillator from being affected by the load of the counter **40**, and the amplifier amplifies the digital output of the oscillator **20** to provide suitable input for the counter **40**. The counter **40** counts the pulses from the oscillator to determine the frequency of the coated crystal as the frequency changes resulting from the corrosion of the metallic substance layered upon the coated crystal **15**.

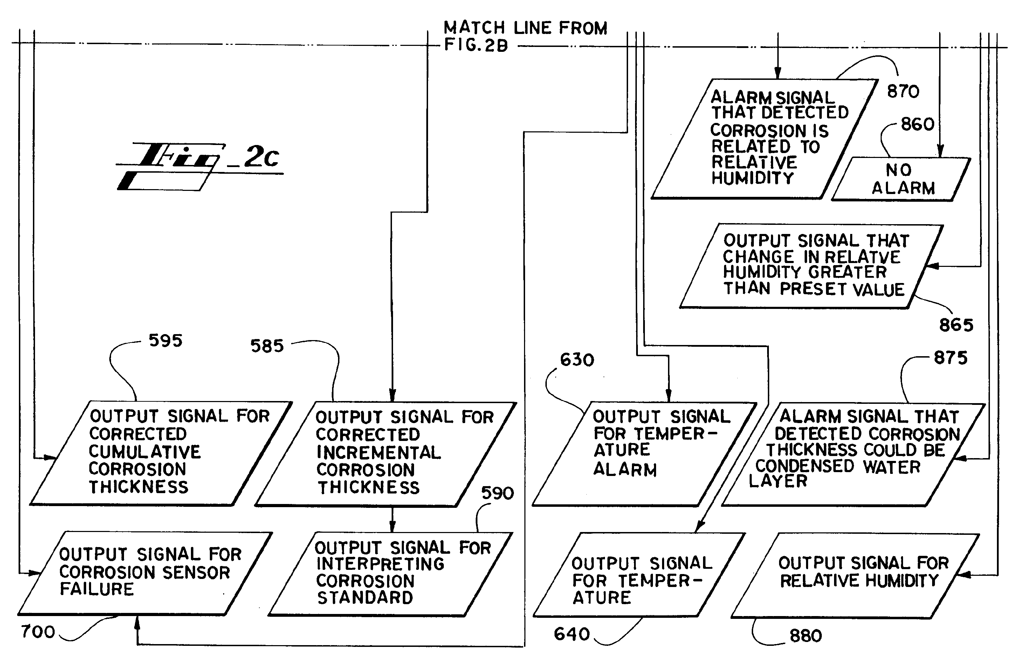

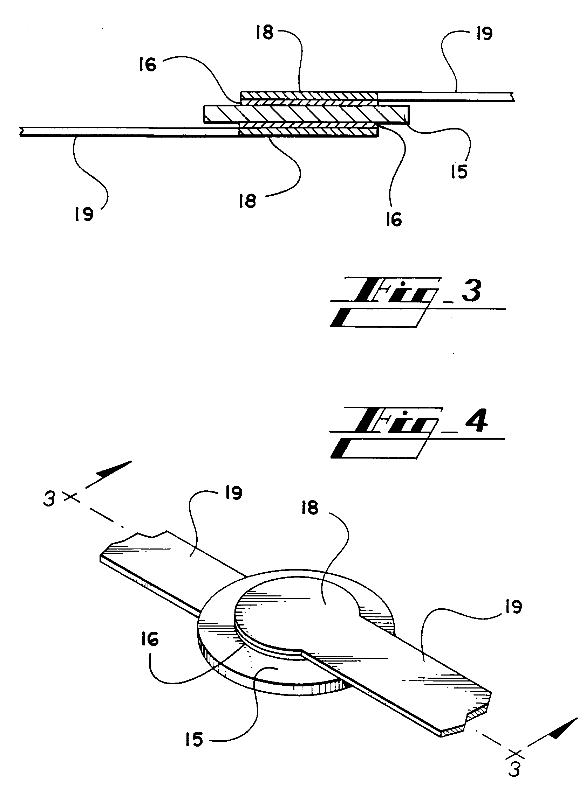

**FIGS. 3** and **4** illustrate the preferred embodiment of the coated quartz crystal **15**. An approximately 30Å thick layer of chromium **16** is bonded or deposited onto both the top and bottom surfaces of the crystal **15**, and a layer of a corrodible metallic substance **18** is then bonded or deposited onto each of the layers of chromium. The thickness of the metallic substance **18** depends upon the type of substance employed, as the examples discussed below illustrate. The chromium **16** serves to bond the corrodible metal **18** to the crystal **15**. The oscillator **20**, which is illustrated in the schematic drawing in **FIG. 1**, is attached to the layers of corrodible metal substance **18** by leads **19**. The construction, mounting, cleaning and driving of the crystal **15** utilize techniques well known in the QCM art. A preferred example is described above.

A preferred crystal mounting arrangement is shown in **FIG. 1**. One or more coated crystals **15** of **FIGS. 3** and **4** are supported below a case **21**. The leads **19** pass upwardly through openings in a tin plated steel dish **21** into the case where they are connected to electronic circuitry. The leads **19** are potted to the dish with epoxy **23**. The coated surface of the crystal **15** is preferably oriented to face downwardly to avoid excess accumulation of dust. A protective cage **22** may be placed around the crystal assembly to prevent accidental contact with the crystal or its coated surface. However, the cage **22** should not appreciably restrict the flow of ambient air past the coated crystal. Multiple coated crystals may be used with one monitor **10**, and may carry different corrodible metals **18**, as defined above.

The frequency of each coated crystal **15**, which decreases as the metallic surface layered upon the crystal corrodes, is output to the counter **40**. The counter **40** also includes conventional circuit elements (not shown) for zeroing the counter output at the original frequency of the coated crystal prior to exposure to the corrosive atmosphere. Therefore, the output from the counter **40** represents the change in frequency of the coated crystal caused by corrosion. The temperature in the corrosive atmosphere is sensed by the temperature sensor **55**, and the relative humidity of the corrosive atmosphere is also sensed, by a humidity sensor **58**. The temperature sensor is preferably of a conventional design such as a National Semiconductor Corp. Model LM35. The humidity sensor is preferably of a conventional design such as a Minicap 2 model, manufactured by Panametrics. The counter **40**, temperature sensor **55**, and the humidity sensor **58** provide output signals to a programmable converter circuit **50**. The converter **50** is preferably a programmable 80C31 microprocessor operating at 8.3886 MHz.

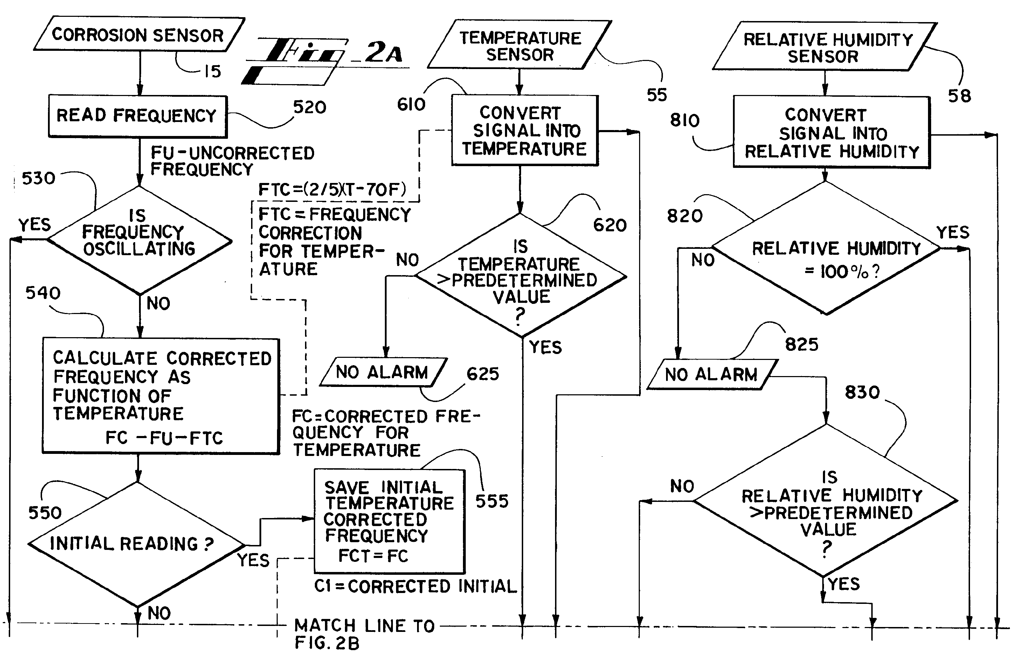

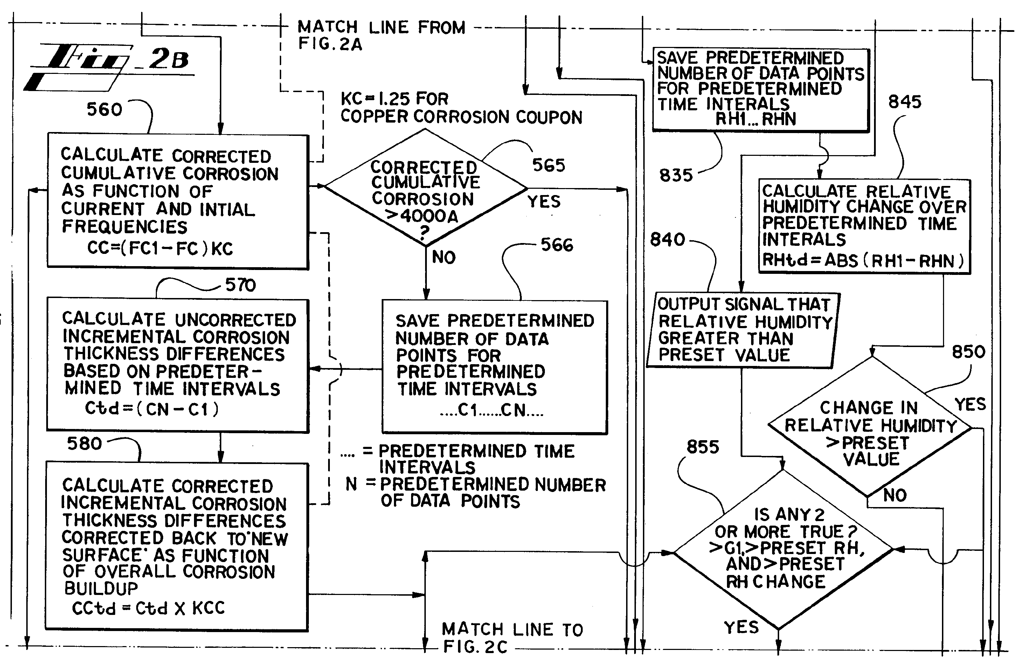

A number of conversion steps occur in the converter circuit **50** as further detailed in **FIG. 2**, and described in detail below. The frequency input from the counter **40** is corrected to allow for any deviations from a predetermined standard temperature. Also in the converter **50**, the frequency is converted to either an analog voltage or an analog current signal, and the voltage or current signal representing the frequency change is then converted to provide a measurement of corrosion thickness which conforms with the ISA standard of corrosion thickness, in Angstroms, corresponding to starting with a clean corrodible surface. This is done by applying to the frequency signal appropriate factors, depending upon the type of corrodible metal on the crystal **15**, the nature of the crystal, and the temperature. Determination of the factors used for these conversions is described below. In addition, if the relative humidity is above a specific predetermined limit, or if the relative humidity has changed by more than a predetermined variation, an appropriate signal will be generated.

Once the final corrosion thickness value is obtained, this value is then preferably output to three separate storage and display media of conventional construction, driven by analog input. The corrosion thickness value is output from the converter **50** to a recording device **70**, such as a chart recorder, along with the frequency change signal and voltage/current signals corresponding to the frequency change. These three values may also be displayed on a LED or LCD display **80**, after being prepared for the device **80** by a conventional display driver **85**. The output signals from the temperature and humidity sensors, which are in the form of frequencies, may also be converted to temperature and humidity values by the converter, and displayed by the display **80**. Finally, the corrosion thickness value in Å may also be stored in the memory of a conventional microprocessor **90**, where it is analyzed and prepared for digital graphic display. The corrosion thickness may then be displayed in graphic form on a digital graphic display monitor **100** driven by a display driver **95** in terms of corrosion thickness over a specific period of time. All values determined by the system may be sent to remote computers via an RS485 serial output port (not shown).

A power supply **99**, with suitable transformers as required, is connected to the various components by lines (not shown). It will be understood that the specifications of the electronics and circuitry illustrated in **FIG. 1** are of a type that is generally known to those who are skilled in the art.

Turning now to **FIG. 2**, the logic flow of the operation of the corrosion monitoring device **10** may be seen. **FIG. 2** is a flow chart for the functions carried out by the converter **50**, which may be programmed to perform such functions by one of ordinary skill in the programming art. As discussed above, the corrosion monitor includes three primary sensors, a corrosion sensor **15**, a temperature sensor **55**, and a relative humidity sensor **58**. The main features of the corrosion sensor **15** are further detailed in **FIGS. 3** and **4**. Typical operation of the corrosion monitoring device is as follows.

Monitoring of corrosion with the device **10** occurs at a series of intervals of time. At the beginning of each interval, the uncorrected vibration frequency **FU** is read at block **520** of **FIG. 2** from the output of the counter **40**. The frequency **FU** is then monitored every few seconds at block **530** using conventional quartz crystal monitoring techniques. If the frequency **FU** is unstable or has a value that is too high or too low according to preset parameters, then the device generates an output signal for corrosion sensor failure, at block **700**. If the frequency **FU** remains stable and within an acceptable range, the converter then corrects the frequency **FU** for any deviation in temperature from a standard, predetermined temperature, at **540**.

The step of correcting the frequency as a function of temperature, at **540**, brings the temperature sensor **58** into play. The temperature sensor **58** provides a signal which is converted into a temperature reading, at block **610**. The temperature reading is used for two purposes. First, the temperature reading is compared to a predetermined limit, at block **620**, and is output as previously described, at block **640**. The limit value is preferably selected to be within the ISA standard for corrosion measurements 21-24°C (70-75°F). If the temperature reading is above the limit value, an output signal is generated indicating a temperature alarm, at block **630**. The temperature reading is also used to correct the frequency at block **540**, giving a temperature-corrected frequency **FC**. The temperature-corrected frequency **FC** is determined by applying a correction formula to the uncorrected frequency. The applicable formula varies depending upon the type and size of corrodible coated crystal employed, and this formula can be determined by exposing a coated crystal in a controlled temperature environment and recording the variation in frequency with changes in temperature.

EXAMPLE 1

A 6MHz, AT cut quartz crystal coated with copper and connected to oscillation and frequency detection circuits as described herein is placed in a test atmosphere which also contains an NBS traceable thermometer. Over a one hour period the temperature in the test atmosphere is changed from 2-32°C (35 to 90 degrees F°), and the changing temperature is compared to the change in frequency of vibration of the quartz crystal. The correction formula for this coated crystal based on the empirical data is determined to be :

$$\mathbf{FTC} = -(2/5)(T - 70°F.) \ (70°F = 21°C)$$

where **FTC** is the frequency correction at temperature T. The temperature-corrected frequency **FC** is obtained by subtracting **FTC** from **FU**.

After the temperature-corrected frequency **FC** is obtained, the device inquires at block **550** as to whether the particular temperature-corrected frequency **FC** being evaluated is the initial temperature-corrected frequency **FC**, namely whether the measurement is at the beginning of the first interval of the monitoring process. If so, the initial temperature-corrected frequency **FC** is saved, at block **555**, as the initial temperature-corrected frequency $\mathbf{FC_i}$.

For each interval, the corrected cumulative corrosive buildup **CC**, represented in the ISA standard of thickness, is calculated, at block **560**. The cumulative buildup is determined by subtracting the temperature-corrected frequency **FC** for the end of the particular interval being monitored from the initial temperature-corrected frequency $\mathbf{FC_i}$ to obtain a cumulative corrected frequency change. Because the frequency reading decreases as the corrosive buildup on the coated crystal increases, this will be a positive value. The result is then multiplied by a conversion factor **KC**, which, like the temperature correction determination, varies depending upon the crystal type and size. The result is cumulative corrosion thickness in Å.

The conversion factor **KC** is may be determined for a coated crystal by placing the coated crystal in a test duct along with ISA reactivity monitoring coupons in a corrosive gas, and comparing the corrosion of the coupons to the change in frequency of the crystaL

EP 0 527 949 B1

EXAMPLE 2

Two 6MHz, AT cut quartz crystals, one coated with copper and the other with silver, are connected to oscillation and frequency detection circuits as described herein and placed in a test duct containing a flow of corrosive gas capable of producing about 250 to 300Å of corrosion per day with no temperature or relative humidity control. Fifteen copper and silver reactivity coupons conforming to ISA specifications are also placed in the duct. Every day one copper and one silver coupon are removed for cathodic/electrolytic reduction to determine the amount of corrosion according to the ISA standard method. The results are compared to the frequency change of the coated quartz crystals over the same period to determine a relationship between the frequency change and the corrosivity of the atmosphere measured according to the ISA standard method. Similar tests have shown that multiplying the frequency change by a factor **KC** of about 1.25 for this type of coated crystal gives the corresponding ISA corrosion thickness in Å for both copper and silver coatings.

Given the correction factor **KC**, the corrected cumulative corrosion **CC** may be determined at block 560 using the following formula:

$$CC = (FC_i - FC)KC$$

After determining the corrected cumulative corrosive buildup **CC**, it is output for storage or display at block **595**. The value of **CC** is also compared to 4000Å, at block **565**. A buildup of corrosion beyond this level renders the coated crystal unreliable. If the corrected cumulative corrosive buildup **CC** is greater than 4000Å, then an output signal for corrosion sensor failure is generated, at block **700**. If the corrected cumulative corrosive buildup **CC** is not greater than 4000Å, then the corrosive buildup is within acceptable parameters and the monitoring process continues. The corrected cumulative corrosive buildup **CC** is saved for each interval being monitored, at block **566**. For a 24 hour interval, 96 data points will be saved, one every 15 minutes. Conventional smoothing techniques may be carried out by the converter **50** in acquiring data points. The uncorrected incremental corrosion thickness differences **C$_{td}$** are calculated for each particular 24 hour interval, at block **570**, by subtracting the value of **CC** at the end of any 24 hour interval, represented as **CN**, from the value of **CC** at the beginning of the same 24 hour interval, represented as **C1**. The 24 hour calculated values are updated every 15 minutes as a new data point is acquired and saved.

The next step in the process is to relate the uncorrected incremental corrosion thickness difference **C$_{td}$**, for any particular interval of time, back to an industry standard, such as the ISA standard, which requires beginning each monitoring period with a prepared reactivity monitoring coupon which has not been exposed to the corrosive atmosphere. Calculation of the "related back" corrosion thickness **CC$_{td}$** is accomplished at block **580** by multiplying the uncorrected incremental corrosion thickness differences **C$_{td}$** by a corrective value **KCC**. Output of the signal **CC$_{td}$** for display or storage in numerical form occurs at block **585**, while output in the form of a signal that represents the corrected incremental corrosion level in terms of the ISA standard notations of G1, G2, G3, or GX occurs at block **590**. In block **590**, the converter determines in which ISA range the numerical value for corrected incremental corrosion falls. The ISA standard corrosion categories of G1, G2, G3, and GX are well known in this industry. However, since the ISA values for these ranges are based on one month's corrosion beginning with a prepared reactivity monitoring coupon which in fact has an initial corrosion layer of about 100Å, the converter uses the following approximate values for the coated quartz crystal over a period of one day:

|     | ISA - One Month | Coated Crystal - One Day |
| --- | --- | --- |
| G1  | < 300Å | < 6.7Å |
| G2  | < 1000Å | < 30Å |
| G3  | < 2000Å | < 63.3Å |
| GX  | > 2000Å | > 63.3Å |

Determination of the particular value for **KCC** is again dependent upon the type and size of the coated crystal employed, and also changes as corrosion builds on the coated crystal. However, the value for **KCC** can be determined empirically by comparing the relationship between the test results obtained using the ISA reactivity monitoring coupon method and those obtained by using the corrosion monitoring device of the present invention.

7

EP 0 527 949 B1

EXAMPLE 3

Three 6 MHz, AT cut copper coated crystals connected to oscillation and frequency detection circuits as described herein are placed with three ISA reactivity monitoring coupons in an isolated atmospherically controlled chamber having a constant relative humidity (50%) and temperature (22°C.). Known concentrations of corrosive gases capable of producing about 400Å of corrosion per day are used to expose the coupons and coated crystals. The coated crystals remain in the chamber, and each day the change in the frequency of the coated crystals is determined. Each day, however, the coupons are removed and replaced with three new prepared coupons. The removed coupons are then tested for corrosive buildup using known ISA approved techniques, so that each day the frequency change of the coated crystals can be compared to the corrosive buildup on the prepared coupons. With this 6 MHz coated crystal, the formula for determining **KCC** is found to be:

$$\mathbf{KCC} = 2 - (1 - \mathbf{CC}/4000)$$

where **CC** is the corrected cumulative corrosive buildup for the end of a particular time interval.

Thus, the process of the present invention allows for monitoring corrosion with a vibrating coated crystal, for any given interval, in terms of thickness of corrosion corresponding to the use of a prepared ISA reactivity monitoring coupon at the outset of the interval. The longevity of the coated crystal is a great advantage as compared to the ISA coupon, which must be destroyed to measure corrosion. Compensation for atmospheric conditions, as described herein, is another advantage of the present invention not contemplated in the prior art.

In the foregoing description, references to ISA standards relate to corrosion of copper, and this ISA standard for copper is used as a particular non-limiting example. It should be understood as noted above that different standards for copper and for other metals can be identified and programmed into the converter **50**.

Throughout the monitoring process, the relative humidity sensor **58** is employed. The humidity sensor **58** provides a signal which is converted into a reading of the relative humidity, at block **810**, and output for display or storage at block **880**. The relative humidity reading is provided to help users of the corrosion monitoring device to determine whether humidity is a cause of corrosive buildup in the atmosphere. The first use of the relative humidity reading is at block **820**, where the relative humidity reading is compared to 100%, a value corresponding to a condensed water layer. If the relative humidity reading is 100%, an alarm signal is generated, at block **875**. If the relative humidity reading is not 100%, then a signal indicating no alarm is generated, at block **825**, and the relative humidity reading is then compared to a predetermined maximum value, at block **830**, which may be for example, 60%. If the relative humidity reading is greater than the predetermined maximum value, then an output signal to that effect is generated, at block **840**. If the relative humidity reading is not greater than the predetermined maximum value, then the relative humidity readings at each 15 minute data acquisition interval over a 24 hour period are saved as data points, at block **835**.

The change in relative humidity $\mathbf{RH_{td}}$ for a selected time interval is then calculated, at block **845**, by comparing the relative humidity at the end of the interval, $\mathbf{RH_n}$, to the relative humidity at the beginning the particular interval, $\mathbf{RH_1}$. If the change in relative humidity $\mathbf{RH_{td}}$ for a particular time interval is greater than a particular preset value for humidity change, such as a 6% change in one hour, as determined at block **850**, then an appropriate output signal is generated, at block **865**. If the change in relative humidity $\mathbf{RH_{td}}$ for a particular time interval is not greater than the preset value for humidity change, then a signal indicating no alarm is generated, at block **860**.

The use of the humidity sensor **58** is tied in to data from the corrosion and temperature sensors **15**, **55** at block **855**, which receives the signal $\mathbf{CC_{td}}$ from block **580**, the relative humidity value, and the output from block **850**. Three questions are posed at block **855**, namely, whether the relative humidity reading is greater than the preset maximum value of block **830**, whether the change in relative humidity reading from one interval to the next is greater than the preset maximum change of block **850**, and whether the corrected incremental corrosion thickness $\mathbf{CC_{td}}$ is greater than the limit represented by the "G1" notation under the ISA standards. If any two of the questions are answered affirmatively, an alarm signal is generated, at block **870**, indicating that any corrosion is likely related to the humidity.

The display device **80** may display numerical values for the various data sensed or calculated by the converter **50**, or may provide indicator lights as shown in Fig. 1. As shown, a row of LED's is provided for indicating the copper corrosion level, using the **ISA** notation G1, G2, G3, or GX. A similar row of LED's is provided for silver corrosion levels selected by the manufacturer. The output for these LED's is triggered in the logic at block **590** of Fig. 2. Also provided are two LED's for indicating failure of the copper and the silver coated crystals, activated at block **700**. Two further LED's indicate whether or not the temperature is greater or lower than the threshold of block **620**, and are activated at blocks **625** and **630**. Another pair of LED's indicate whether or not the relative humidity has changed more than a preset amount in the last time interval (blocks **850**, **860** and **865**), and a final pair of LED's indicate whether or not the relative humidity has exceeded the preset maximum

8

value (blocks **830** and **840**).

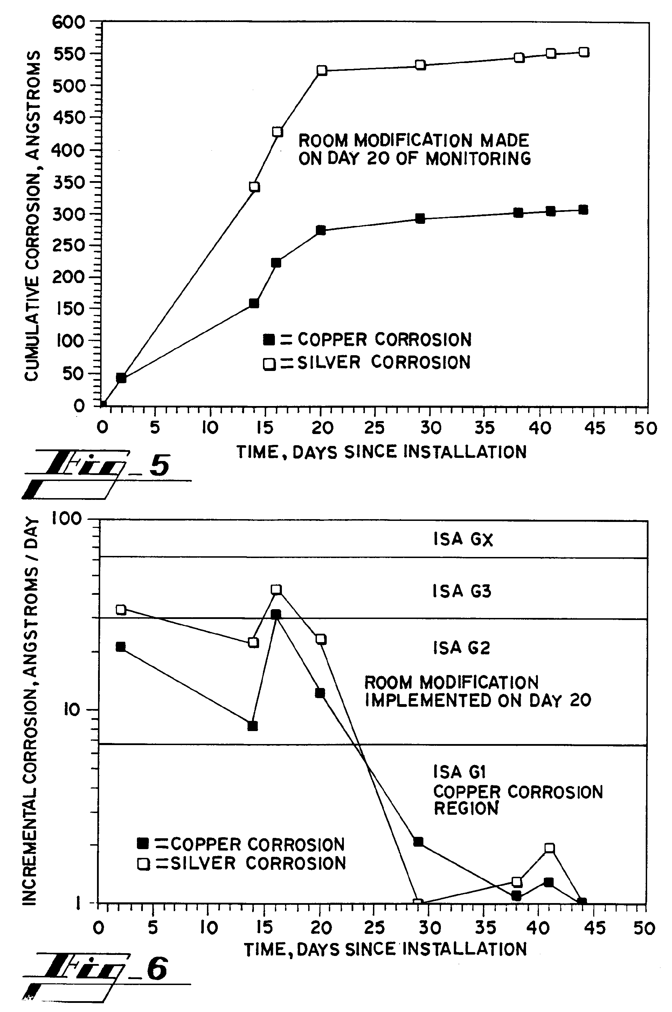

Turning now to **FIGS. 5** and **6**, the performance advantages of the preferred embodiment of the present invention are illustrated. **FIG. 5** is a graphical representation of the performance of the present invention, reported in terms of corrected cumulative corrosive buildup **CC**, which is fully detailed in the discussion of **FIG. 2**. As illustrated in **FIG. 5**, the corrected cumulative corrosive buildup **CC** may be reported for any given day throughout the testing period. The measurement of the corrosive buildup on the coated crystal on any given day does not in any way impede the ability to use the same coated crystal to accurately measure corrosion at a later time. Similarly, **FIG. 6** is a graphical representation of the corrected, or "related back," incremental corrosion thickness $CC_{td}$, also detailed in the discussion of **FIG. 2**. The graph illustrates the amount of corrosion in terms of the four ISA corrosion categories, described hereinabove. As with the cumulative corrosive buildup **CC**, the corrected, or "related back," incremental corrosion thickness $CC_{td}$ may be reported for any given increment without necessitating the destruction of the test coated crystal. As is also clearly evident from the information depicted in **FIGS. 5** and **6**, the corrosion monitoring method of the present invention allows for the rapid and efficient correction of corrosion-causing conditions by giving an accurate indication of corrosion rate much sooner than prior methods. In both **FIGS. 5** and **6**, it is clear that when the room modifications were made, at day **20**, the corrosive buildup substantially decreased, to the point that the curve in **FIG. 5** is nearly a straight line and the data points in **FIG. 6** all fall within the G1, or least corrosive, category under the ISA standard. In contrast, the *Falat* reference suggests that monitoring will take on the order of six months, and the ISA standard is based on at least **30** days of exposure of a test coupon, followed by a time-consuming chemical analysis of the coupon. Additionally, by plotting corrosion on an interval basis, such as is illustrated in **FIG. 6**, corrosion-causing events can be more readily tracked.

Accordingly, it will be understood that the preferred embodiment of the present invention has been disclosed by way of example and that other modifications and alterations may occur to those skilled in the art without departing from the scope and spirit of the appended claims.

## Claims

1. A method of monitoring corrosion in a corrosive atmosphere, including the steps of exciting in the atmosphere a crystal (15), coated with a corrodible metallic substance (18) and having a known vibration frequency, measuring the change in said frequency resulting from corrosion of said corrodible substance during each of a plurality of intervals of time, including an initial interval and at least one subsequent measurement interval, characterized in that:

   said frequency change is converted to an incremental corrosion thickness signal indicative of corrosion thickness at each interval; and

   said incremental corrosion thickness signal is multiplied by an empirically found corrective value dependent on corrosion buildup so as to represent the corrosion thickness that would have resulted if, at the beginning of the interval, a new, unblemished reactivity monitoring coupon prepared according to a reactivity monitoring standard had been used to monitor corrosion during the interval.

2. The method of Claim 1, further characterized by the step of correcting said frequency change to account for surrounding temperature variations.

3. The method of Claim 1, wherein said step of generating said incremental thickness signal is further characterized by measuring said frequencies at the beginning and end of said measurement interval, correcting said frequencies to account for surrounding temperature variations, multiplying said temperature-corrected frequencies by a thickness conversion factor to obtain cumulative corrosion thickness values for the beginning and end of said measurement interval, and subtracting said cumulative corrosion thickness values to obtain said incremental thickness signal.

4. The method of Claim 1, wherein said coated crystal initially vibrates at about 6 MHz, and wherein said corrective value is about:

$$2 - (1 - (CC/4000))$$

where CC is a cumulative corrosion thickness value during said measurement interval.

5. The method of any of Claim 1, further characterized by the steps of:

   monitoring the relative humidity in said corrosive atmosphere; and

   providing a warning signal indicating that corrosion in said atmosphere is related to humidity whenever said relative humidity exceeds a predetermined level or rises at greater than a predetermined rate.

6. The method of Claim 1, wherein said corrective value is determined by comparing frequency changes of said coated crystal with corrosion accumulated on reactivity monitoring coupons placed in a common test atmosphere.

7. The method of Claim 6, further characterized by the step of storing said corrected thickness signal.

8. The method of Claim 7, further characterized by the step of displaying said corrected thickness signal.

9. The method of Claim 8, further characterized by the steps of measuring and displaying an indicia of the temperature condition at which said frequency is measured.

10. The method of Claim 9, wherein said corrodible substance is a metal selected from the group consisting of copper, silver, and nickel and gold-coated corrodible metals.

11. The method of Claim 1, wherein said reactivity monitoring procedure follows substantially an ISA coupon procedure for monitoring corrosion.

12. An apparatus for carrying out the method of Claim 1, for monitoring corrosion in a corrosive atmosphere, including means (20) to excite in the atmosphere a crystal (15), coated with a corrodible metallic substance (18) and having a known vibration frequency, means (40, 50) to measure the change in said frequency resulting from corrosion of said corrodible substance during each of a plurality of intervals of time, including an initial interval and at least one subsequent measurement interval, characterized by:

means (50) to convert said frequency change to an incremental corrosion thickness signal indicative of corrosion thickness at each interval; and

means (50) to multiply said incremental corrosion thickness signal by an empirically found corrective value dependent on corrosion buildup so as to represent the corrosion thickness that would have resulted if, at the beginning of the interval, a new, unblemished reactivity monitoring coupon prepared according to a reactivity monitoring standard had been used to monitor corrosion during the interval.


**Patentansprüche**

1. Verfahren zur Korrosionskontrolle in einer korrosiven Atmosphäre, bei dem in der Atmosphäre ein Kristall (15), der mit einem korrodierenden metallischen Werkstoff (18) beschichtet ist und der eine bekannte Vibrationsfrequenz hat, bei dem die sich aufgrund der Korrosion des korrodierenden Werkstoffs während jedes einer Vielzahl von Zeitintervallen ergebende Frequenzänderung gemessen wird, wobei die Zeitintervalle ein Anfangsintervall und zumindest ein darauf folgendes Meßintervall aufweisen, dadurch gekennzeichnet, daß die Frequenzänderung in ein inkrementales Korrosionsdickensignal umgewandelt wird, das die Korrosionsdicke in jedem Intervall anzeigt, und daß das inkrementale Korrosionsdickensignal mit einem empirisch aufgefundenen Korrekturwert in Abhängigkeit vom Korrosionsaufbau multipliziert wird, so daß die Korrosionsdicke dargestellt wird, die sich ergeben hätte, wenn, zu Beginn des Intervalls, ein neuer, unbelasteter Reaktivitätsanzeigeprobeblock, der entsprechend einem Reaktivitätsanzeigestandard präpariert ist, für die Korrosionsanzeige während des Intervalls verwendet worden wäre.

2. Verfahren nach Anspruch 1, das weiterhin durch den Schritt der Korrektur der Frequenzänderung zur Berücksichtigung von Änderungen der umgebenden Temperatur gekennzeichnet ist.

3. Verfahren nach Anspruch 1, bei dem der Schritt der Erzeugung des inkrementalen Dickensignals weiterhin dadurch gekennzeichnet ist, daß die Frequenzen bei Beginn und bei Ende des Meßintervalls gemessen werden, daß die Frequenzen zur Berücksichtigung von Änderungen der umgebenden Temperatur korrigiert werden, daß die temperaturkorrigierten Frequenzen mit einem Dickenumwandlungsfaktor multipliziert werden, um kumulative Korrosionsdickenwerte für den Anfang und das Ende des Meßintervalls zu erzielen, und daß die kumulativen Korrosionsdickenwerte subtrahiert werden, um das inkrementale Dickensignal zu erzielen.

4. Verfahren nach Anspruch 1, bei dem der beschichtete Kristall anfangs mit etwa 6 MHz vibriert und bei dem der Korrekturwert etwa ist:

EP 0 527 949 B1

$$2 - (1 - (CC/4000)),$$
wobei CC ein kumulativer Korrosionsdickenwert während des Meßintervalls ist.

5. Verfahren nach Anspruch 1, das des weiteren dadurch gekennzeichnet ist, daß die relative Luftfeuchtigkeit in der korrosiven Atmosphäre erfaßt wird und daß ein Warnsignal erzeugt wird, das anzeigt, daß die Korrosion in der Atmosphäre aufgrund der Luftfeuchtigkeit auftritt, wann immer die relative Luftfeuchtigkeit ein vorgegebenes Niveau übersteigt oder mit einer Geschwindigkeit ansteigt, die größer als eine vorgegebene Geschwindigkeit ist.

6. Verfahren nach Anspruch 1, bei dem der Korrekturwert ermittelt wird, indem Frequenzänderungen des beschichteten Kristalls mit der akkumulierten Korrosion auf Reaktivitätsanzeigeprobeblöcken verglichen wird, die in einer gemeinsamen Prüfungsatmosphäre plaziert sind.

7. Verfahren nach Anspruch 6, das des weiteren durch den Schritt der Speicherung des korrigierten Dickensignals gekennzeichnet ist.

8. Verfahren nach Anspruch 7, das des weiteren durch den Schritt der Anzeige des korrigierten Dickensignals gekennzeichnet ist.

9. Verfahren nach Anspruch 8, weiterhin dadurch gekennzeichnet, daß ein Indiz der Temperaturbedingung, bei dem die Frequenz gemessen wird, gemessen und dargestellt wird.

10. Verfahren nach Anspruch 9, bei dem der korrodierende Werkstoff ein Metall ist, das aus der aus Kupfer, Silber, Nickel und Gold beschichteten korrodierenden Metalle bestehenden Gruppe ausgewählt ist.

11. Verfahren nach Anspruch 1, bei dem das Reaktivitätsanzeigeverfahren etwa der ISA-Probeblockmethode zur Kontrolle von Korrosion folgt.

12. Vorrichtung zur Ausführung des Verfahrens gemäß Anspruch 1 zur Kontrolle von Korrosion in einer korrosiven Atmosphäre, mit einem Mittel zur Anregung eines in der Atmosphäre befindlichen Kristalls (15), der mit einem korrodierenden metallischen Werkstoff (18) beschichtet ist und eine bekannte Vibrationsfrequenz aufweist, einem Mittel (40, 50) zur Messung der sich aufgrund der Korrosion des korrodierenden Werkstoffs während jedes einer Vielzahl von Zeitintervallen ergebenden Frequenzänderung, wobei die Zeitintervalle ein Anfangsintervall und zumindest ein darauf folgendes Meßintervall aufweisen, gekennzeichnet durch eine Einrichtung (50) zur Umwandlung der Frequenzänderung in ein inkrementales Korrosionsdickensignal, das bei jedem Intervall die Korrosionsdicke anzeigt, und eine Einrichtung (50) zur Multiplikation des inkrementalen Korrosionsdickensignals mit einem empirisch aufgefundenen Korrekturwert in Abhängigkeit vom Korrosionsaufbau, so daß die Korrosionsdicke dargestellt wird, die sich ergeben hätte, wenn zu Beginn des Intervalls ein neuer, unbelasteter Reaktivitätsanzeigeprobeblock, der entsprechend einem Reaktivitätsanzeigestandard vorbereitet ist, verwendet worden wäre, um die Korrosion während des Intervalls darzustellen.

## Revendications

1. Procédé de contrôle de la corrosion dans une atmosphère corrosive, comprenant les étapes suivantes consistant à exciter dans l'atmosphère un cristal (15) recouvert d'une substance métallique corrodible (18) et à fréquence de vibration connue, à mesurer la variation de cette fréquence résultant de la corrosion de la substance corrodible durant chacun d'une pluralité d'intervalles de temps, comprenant un intervalle initial et au moins un intervalle de mesure postérieur, caractérisé en ce que :
   . la variation de fréquence est convertie en un signal d'augmentation d'épaisseur de corrosion indiquant l'épaisseur de la corrosion à chaque intervalle et en ce que :
   . le signal d'augmentation d'épaisseur de corrosion est multiplié par une valeur de correction trouvée par une méthode empirique, dépendante du développement de la corrosion, de manière à représenter l'épaisseur de corrosion qui aurait été obtenue si au début de l'intervalle on avait utilisé, pour contrôler la corrosion durant l'intervalle, un échantillon de contrôle de réactivité neuf et intact, préparé selon un contrôle de réactivité standard.

2. Procédé selon la revendication 1, caractérisé en outre par l'étape consistant à corriger la variation de fréquence pour tenir compte des variations de la température ambiante.

3. Procédé selon la revendication 1, dans lequel l'étape consistant à générer le signal d'augmentation d'épaisseur est en outre caractérisée par la mesure des fréquences au début et à la fin de l'intervalle de mesure, la correction de ces fréquences pour tenir compte des variations de la température ambiante, la multiplication de ces fréquences corrigées des données relatives à la température par un facteur de conversion d'épaisseur pour obtenir les valeurs cumulées d'épaisseur de corrosion pour le début et la fin de l'intervalle de mesure, et par la soustraction de ces valeurs cumulées d'épaisseur de corrosion pour obtenir un signal d'augmentation d'épaisseur.

4. Procédé selon la revendication 1, dans lequel le cristal recouvert vibre initialement à environ 6 MHz, et dans lequel la valeur de correction est environ de :

$$2 - [1 - (CC/4000)]$$

où CC est une valeur cumulée d'épaisseur de corrosion durant l'intervalle de mesure.

5. Procédé selon l'une quelconque des revendications précédentes ou selon la revendication 1, caractérisé en outre par les étapes suivantes :
   . contrôle de l'humidité relative dans l'atmosphère corrosive ;
   . fourniture d'un signal d'avertissement indiquant que la corrosion dans l'atmosphère est liée à l'humidité chaque fois que cette humidité relative excède un niveau prédéterminé ou augmente jusqu'à dépasser un taux prédéterminé.

6. Procédé selon la revendication 1, caractérisé en ce que la valeur de correction est déterminée en comparant les changements de fréquence du cristal recouvert avec la corrosion accumulée sur des échantillons de contrôle de réactivité placés dans une atmosphère-test commune.

7. Procédé selon la revendication 6, caractérisé en outre par l'étape consistant à mettre en mémoire le signal corrigé d'épaisseur.

8. Procédé selon la revendication 7, caractérisé en outre par l'étape consistant à afficher le signal corrigé d'épaisseur.

9. Procédé selon la revendication 8, caractérisé en outre par l'étape consistant à mesurer et à afficher une valeur indicative de la condition de température à laquelle la fréquence est mesurée.

10. Procédé selon la revendication 9, caractérisé en ce que la substance corrodible est un métal choisi dans le groupe comprenant le cuivre, l'argent et le nickel, et les métaux corrodibles plaqués or.

11. Procédé selon la revendication 1, caractérisé en ce que le processus de contrôle de la réactivité correspond pour l'essentiel à un processus dit "d'échantillon ISA" pour le contrôle de la corrosion.

12. Appareil pour réaliser le procédé selon la revendication 1, pour contrôler la corrosion dans une atmosphère corrosive, comprenant des moyens (20) pour exciter dans l'atmosphère un cristal (15) recouvert d'une substance métallique corrodible (18) et dont la fréquence de vibration est connue, moyens (40, 50) pour mesurer la variation de fréquence résultant de la corrosion de cette substance corrodible durant chacun d'une pluralité d'intervalles de temps, comprenant un intervalle initial et au moins un intervalle de mesure postérieur, caractérisé par :
   . des moyens (50) de conversion de la variation de fréquence en un signal d'augmentation d'épaisseur de corrosion, indiquant l'épaisseur de la corrosion à chaque intervalle, et par :
   . des moyens (50) de multiplication de ce signal d'augmentation d'épaisseur de corrosion par une valeur de correction trouvée par une méthode empirique dépendant du développement de la corrosion de manière à représenter l'épaisseur de corrosion qui aurait été obtenue si au début de l'intervalle on avait utilisé, pour contrôler la corrosion durant l'intervalle, un échantillon de contrôle de réactivité neuf et intact, préparé selon un contrôle de réactivité standard.

Fig. 1

$Fig$ $2A$

CORROSION SENSOR 15

READ FREQUENCY 520

FU-UNCORRECTED FREQUENCY

530 IS FREQUENCY OSCILLATING — YES / NO

$FTC=(2/5)(T-70F)$

FTC = FREQUENCY CORRECTION FOR TEMPERATURE

540 CALCULATE CORRECTED FREQUENCY AS FUNCTION OF TEMPERATURE
$FC - FU - FTC$

FC = CORRECTED FREQUENCY FOR TEMPERATURE

550 INITIAL READING ? — YES / NO

555 SAVE INITIAL TEMPERATURE CORRECTED FREQUENCY $FCT = FC$

CI = CORRECTED INITIAL

MATCH LINE TO FIG. 2B

TEMPERATURE SENSOR 55

610 CONVERT SIGNAL INTO TEMPERATURE

620 IS TEMPERATURE > PREDETERMINED VALUE ? — NO / YES

625 NO ALARM

RELATIVE HUMIDITY SENSOR 58

810 CONVERT SIGNAL INTO RELATIVE HUMIDITY

820 RELATIVE HUMIDITY = 100% ? — NO / YES

825 NO ALARM

830 IS RELATIVE HUMIDITY > PREDETERMINED VALUE ? — NO / YES

EP 0 527 949 B1

Fig_2B

560

CALCULATE CORRECTED CUMULATIVE CORROSION AS FUNCTION OF CURRENT AND INITIAL FREQUENCIES
$CC = (FC1 - FC) KC$

$KC = 1.25$ FOR COPPER CORROSION COUPON

565

CORRECTED CUMULATIVE CORROSION >4000A ?   YES

NO

566

570

CALCULATE UNCORRECTED INCREMENTAL CORROSION THICKNESS DIFFERENCES BASED ON PREDETERMINED TIME INTERVALS
$Ctd = (CN - C1)$

SAVE PREDETERMINED NUMBER OF DATA POINTS FOR PREDETERMINED TIME INTERVALS
....C1......CN....

.... = PREDETERMINED TIME INTERVALS
N = PREDETERMINED NUMBER OF DATA POINTS

580

CALCULATE CORRECTED INCREMENTAL CORROSION THICKNESS DIFFERENCES CORRECTED BACK TO "NEW SURFACE" AS FUNCTION OF OVERALL CORROSION BUILDUP
$CCtd = Ctd \times KCC$

SAVE PREDETERMINED NUMBER OF DATA POINTS FOR PREDETERMINED TIME INTERALS
RH1...RHN

845

835

CALCULATE RELATIVE HUMIDITY CHANGE OVER PREDETERMINED TIME INTERALS
$RHtd = ABS(RH1 - RHN)$

840

OUTPUT SIGNAL THAT RELATIVE HUMIDITY GREATER THAN PRESET VALUE

850

CHANGE IN RELATIVE HUMIDITY >PRESET VALUE   YES

NO

855

IS ANY 2 OR MORE TRUE? >G1,>PRESET RH, AND >PRESET RH CHANGE   YES

EP 0 527 949 B1

*Fig_2c*

MATCH LINE FROM
FIG.2B

ALARM SIGNAL
THAT DETECTED
CORROSION IS
RELATED TO
RELATIVE
HUMIDITY — 870

NO
ALARM — 860

OUTPUT SIGNAL THAT
CHANGE IN RELATVE
HUMIDITY GREATER
THAN PRESET VALUE — 865

595

585

630

875

OUTPUT SIGNAL FOR
CORRECTED
CUMULATIVE
CORROSION
THICKNESS

OUTPUT SIGNAL FOR
CORRECTED
INCREMENTAL
CORROSION
THICKNESS — 590

OUTPUT SIGNAL
FOR TEMPER-
ATURE
ALARM

ALARM SIGNAL THAT
DETECTED CORROSION
THICKNESS COULD BE
CONDENSED WATER
LAYER

OUTPUT SIGNAL FOR
CORROSION SENSOR
FAILURE — 700

OUTPUT SIGNAL FOR
INTERPRETING
CORROSION
STANDARD

OUTPUT SIGNAL
FOR TEMPER-
ATURE — 640

OUTPUT SIGNAL FOR
RELATIVE HUMIDITY — 880

18    19

16    

19    18    16    15

Fig_3

Fig_4

3

19    18

16    19

15    3

Fig_5

Fig_6